# EUROPÄISCHE PATENTSCHRIFT

(11) **EP 1 088 775 B1**
(45) Veröffentlichungstag und Bekanntmachung des Hinweises auf die Patenterteilung: **14.05.2003**
(21) Anmeldenummer: 00119525.4
(22) Anmeldetag: 07.09.2000
(51) Int. Cl.: B65G 17/38, B65G 17/12, B65G 17/08, B65G 45/08, B65G 17/06, B65G 17/24, B65G 21/22, B65G 45/02, F16H 57/05, F24C 15/10, A47J 37/07, B27C 1/12

(54) **Transportkette insbesondere für Kantenbearbeitungsmaschinen**
Conveyor chain in particular for machines for machining edges
Chaîne de transport en particulier pour machines pour l'usinage des arrêtes

(30) Priorität: 28.09.1999 DE 19946365
(43) Veröffentlichungstag der Anmeldung: 04.04.2001
(73) Patentinhaber: SBR MASCHINEN-HANDELSGESELLSCHAFT MBH & CO. KG, D-32051 Herford (DE)
(72) Erfinder: Tychsen, Detlef, 32584 Löhne (DE); Rottmann, Manfred, 32120 Hiddenhausen (DE)
(74) Vertreter: Gramm, Werner, Prof. Dipl.-Ing.

(56) Entgegenhaltungen:
- DE-A- 2 912 194
- DE-U- 7 320 344
- US-A- 2 304 571
- US-A- 3 262 550
- US-A- 3 744 618
- US-A- 4 926 971

## Beschreibung

Die Erfindung betrifft eine Transportkette für im Durchlaufverfahren spanend zu bearbeitende leisten- oder plattenförmige Werkstücke, insbesondere für Kantenbearbeitungsmaschinen oder Doppelendprofiler, mit Kettengliedern, die ein endloses, um Kettenräder umgelenktes Kettenband mit im wesentlichen durchgehender Lasttragfläche bilden, durch Verbindungsstücke undparallele, in Nadellagern gelagerte Kettenbolzen miteinander verbunden sind und sich auf zwei parallel und im Abstand voneinander angeordneten stationären Führungen abstützen.

Eine derartige Ausführungsform lässt sich der DE 29 12 194 C2 entnehmen. Hier bildet die eine stationäre Schiene eine positive Prismenführung, die in eine entsprechend negativ ausgebildete Prismenbahn in den Kettengliedern eingreift. Die andere Schiene ist als Stützleiste ausgebildet. Dabei ist die Prismenführung seitens der Führungsleiste durch Kugellager mit entsprechend positiv profiliertem Außenring gebildet, die in eine entsprechend negativ ausgebildete Prismenbahn der Kettenglieder eingreifen. Die Stützleiste ist mit Stützlagern mit glattem Außenring bestückt. Zum Einzahnen in die Kettenräder ragen die Kettenbolzen mit ihren Bolzenenden über die Kettenlaschen hinaus.

Andere Ausführungsformen offenbaren z.B. das DE-GM 73 20 344 sowie die US-PS 3,262,550.

Die im Stand der Technik eingesetzten gleitenden oder rollenden Kettenführungssysteme haben aufgrund des an den Führungsteilen auftretenden Reibungsverschleißes Standzeitprobleme, die noch durch nicht mit ausreichender Sicherheit aus den Führungen zu entfernende Staubpartikel verstärkt werden. Die Maßhaltigkeit zwischen Werkstück- und Werkzeugposition lässt sich allenfalls durch Anbringen von seitlichen Gleitauflageleisten für die Werkstücke gewährleisten. Dann können aber empfindliche Oberflächen durch die zwischen Werkstückfläche und Gleitauflageleiste auftretende Reibung beschädigt werden. Auch Rillenkugellager-Außenringe verschleißen durch Reibungsverschleiß und weisen daher nur begrenzte Standzeiten auf. Staubeintritt kann zum Abbremsen der Außenringe und damit zum Heißlaufen von Lagern führen, was sich bei der großen Anzahl von Lagern nicht oder nur mit großem Aufwand überprüfen lässt.

Der Erfindung liegt die Aufgabe zugrunde, eine Transportkette der eingangs beschriebenen Bauform zu entwickeln, die eine hohe Standzeit aufweist und Vorschubgeschwindigkeiten von bis zu 200 m/min. zulässt bei höchster Bearbeitungsgenauigkeit und -qualität.

Ausgehend von der eingangs beschriebenen Transportkette wird diese Aufgabe erfindungsgemäß dadurch gelöst, dass jedes Kettenglied zwei den stationären Führungen zugeordnete, positiv ausgebildete prismatische oder zylindrische Führungsprofile (nachfolgend: Außenprisma) aufweist, die in ihnen im Querschnitt angepaßten Führungsrinnen (nachfolgend: Innenprisma) der stationären Führungen gleitend geführt sind, die über Öl-Zulauf- und -Rücklaufleitungen an ein Öl-Umlaufdruckschmiersystem angeschlossen sind und eine selbstzentrierende Gleitführung mit geschlossenem, die Kettenglieder gleitend tragenden Ölfilm bilden.

Soweit nachfolgend auf Außen- bzw. Innenprismen, Prismeneingriffsbereich oder dergleichen Bezug genommen wird, gelten diese Ausführungen in der Regel auch für zylindrische, also für solche Führungssysteme, bei denen sich der Querschnitt des Führungsprofils nach unten verjüngt bzw. sich der Querschnitt der zugeordneten Führungsrinne in Anpassung an das positiv ausgestaltete Führungsprofil nach oben erweitert.

Da im Bereich der Führungsgleitflächen keine metallische Berührung mehr auftritt, entsteht an den Gleitflächen kein Reibungsverschleiß und somit Dauerhaftigkeit der Maßgenauigkeit. Es gibt keine Maßabweichung mehr zwischen Werkstück- und Werkzeugposition. Das vibrationsfreie und geräuscharme Gleiten der Kettenplatten auf einem geschlossenen Ölfilm führt zu einer verbesserten Werkstückkantenqualität und zu hohen Werkzeugstandwegen und zwar auch bei höchsten Vorschubgeschwindigkeiten. Bei der Bearbeitung von Werkstücken für z.B. Laminatfußböden, Echtholzfußböden oder dergleichen lässt sich eine Füge- und Winkelgenauigkeit von etwa 0,01 mm erzielen.

Aufgrund der an sich bestehenden Überbestimmung ist es zweckmäßig, wenn zumindest eine der beiden stationären Führungen höhenund seitenjustierbar an einem Kettenträger befestigt ist.

Um in der Lasttragfläche des Transportbandes das Eindringen von Staub zwischen benachbarten Kettengliedern zu verhindern, ist es zweckmäßig, wenn jedes Kettenglied eine den Trennspalt zwischen benachbarten Kettengliedern überbrückende Spaltdichtung aufweist.

Das Eindringen von Staub in den Umlaufbereich der Nadellagerkette lässt sich erfindungsgemäß zusätzlich dadurch verhindern, dass die Präzisionsnadellagerkette in einem seitlich von den beiden stationären Führungen begrenzten, als Überdruckkammer ausgebildeten Hohlraum umläuft, der mit Druckluft beaufschlagt ist.

Um eine einwandfreie Prismenführung zu gewährleisten, ist es vorteilhaft, wenn am Kettenbahneinlauf ein Staubabstreifer für die Außenprismen der Kettenglieder vorgesehen ist, und wenn am Kettenbahnauslauf ein Ölabstreifer für die Außenprismen der Kettenglieder vorgesehen ist.

Soweit Staub in die Prismenführung eindringt, erfolgt durch den Ölumlauf eine Staubpartikel-Ausspülung. Es ist daher zweckmäßig, wenn eine Filteranlage für das aus den Führungsrinnen zurücklaufende Öl vorgesehen ist.

Um auch bei hohen Transportgeschwindigkeiten einen ruhigen Lauf der Nadellagerkette zu erzielen, ist es zweckmäßig, wenn die mit kleiner Teilung ausgebildete Nadellagerkette um Kettenräder mit verhältnismäßig großem Durchmesser herumgeführt wird. Hierunter werden Kettenräder von etwa 2 m Radumfang verstanden, die aufgrund ihres großen Durchmessers geringere Umdrehungen, aber eine größere Zähnezahl aufweisen können, woraus sich ein geringerer Polygoneffekt ergibt.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung dargestellt. Es zeigen
- **Figur 1**: in schematischer Darstellung in Seitenansicht ein Transportkettensystem;
- **Figur 2**: in vergrößertem Maßstab ein Detail der Figur 1 und
- **Figur 3**: in vergrößertem Maßstab einen Querschnitt gemäß der Linie III-III in Figur 1.

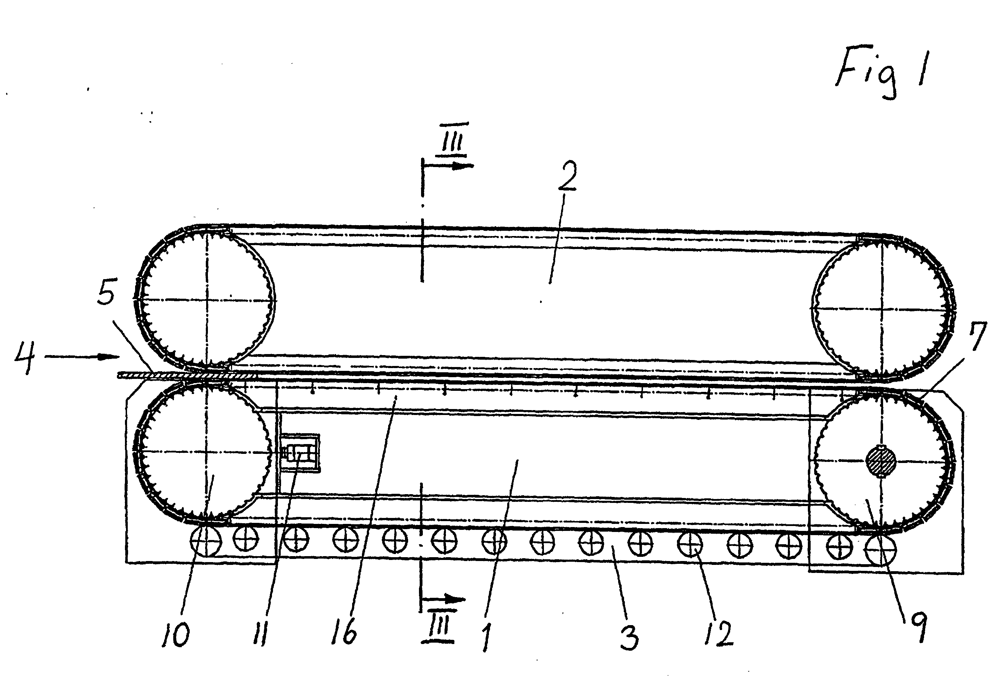

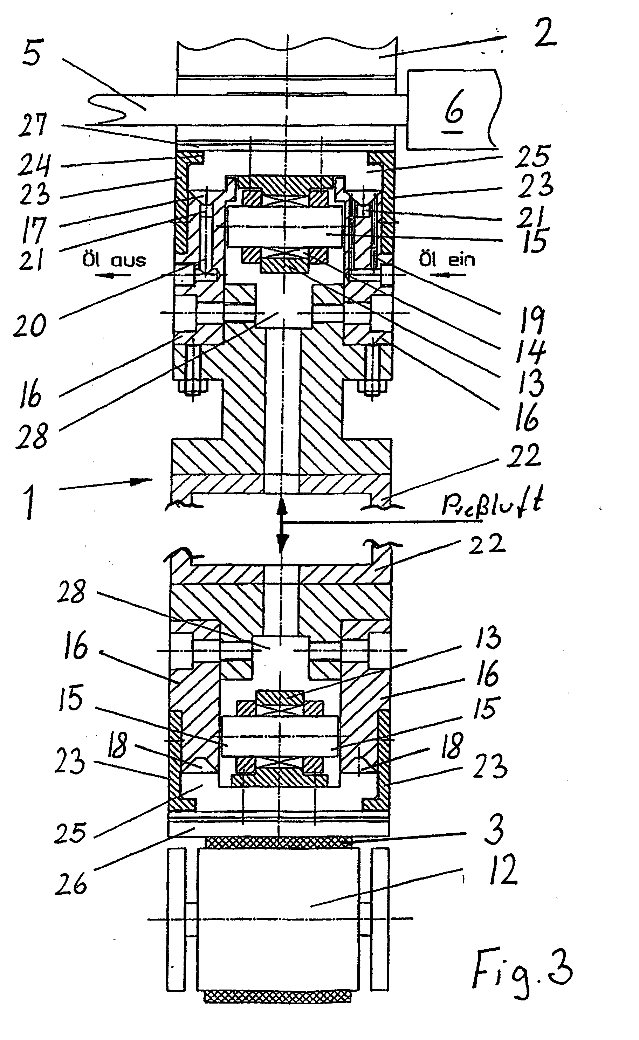

Das in Figur 1 dargestellte Kettentransportsystem setzt sich zusammen aus einer die zu bearbeitenden Werkstücke aufnehmenden Transportkette 1, einem die Werkstücke einspannenden Oberdrucksystem 2 und einem den unteren bzw. losen Trum der Transportkette 1 abstützenden Gurtband 3. Figur 1 lässt ein in Richtung des eingezeichneten Transportpfeiles 4 in das Kettensystem einlaufendes Werkstück 5 erkennen, das an seinen in Transportrichtung verlaufenden Seitenkanten spanend bearbeitet werden soll. Hierfür ist in Figur 3 ein Werkzeug 6 angedeutet.

Die Transportkette 1 besteht im wesentlichen aus Kettengliedern 7, die ein endloses, um Kettenräder umgelenktes Kettenband mit einer im wesentlichen durchgehenden Lasttragfläche 8 bilden. Dabei ist das in Figur 1 rechts dargestellte Kettenrad ein Antriebskettenrad 9 und das links dargestellte Kettenrad ein Spannkettenrad 10, das sich über ein pneumatisch oder hydraulisch geregeltes Spannlager 11 beaufschlagen lässt. Das Antriebskettenrad wird über einen nicht näher dargestellten regelbaren Servomotor angetrieben. Synchron hierzu erfolgt der ebenfalls nicht näher dargestellte Antrieb für das Gurtband 3, das über kugelgelagerte Stützrollen 12 geführt ist.

Die einzelnen Kettenglieder 7 sind über eine Präzisionsnadellagerkette 13 miteinander verbunden, die eine kleine Teilung und staubdicht eingebaute Nadellager 14 aufweist, in denen parallel zueinander angeordnete Kettenbolzen 15 gelagert sind, die beidseitig in die Kettenräder 9, 10 einzahnen.

Die über Verbindungsstücke miteinander verbundenen Kettenglieder 7 stützen sich auf zwei parallel und im Abstand voneinander angeordneten stationären Führungen 16 ab, die leistenförmig ausgebildet sind und jeweils eine einem Außenprisma 17 des Kettengliedes 7 zugeordnete, als Innenprisma ausgebildete Führungsrinne 18 aufweist. Letztere ist über mehrere, über die Länge der Transportkette 1 im Abstand voneinander angeordnete Öl-Zulaufbohrungen 19 sowie über ebenfalls im Abstand voneinander angeordnete Öl-Rücklaufbohrungen 20 an ein in der Zeichnung nicht näher dargestelltes Öl-Umlaufdruckschmiersystem angeschlossen, in das eine ebenfalls nicht näher dargestellte Filteranlage für das aus den Führungsrinnen 18 zurücklaufende Öl integriert ist. Jede Führungsrinne 18, die vorzugsweise als 90°-Innenprisma ausgebildet ist, weist eine mittige Längsnut 21 für den Ölrücklauf auf. Das aus gehärtetem und geschliffenem Stahl bestehende Innenprisma jeder Führungsrinne 18 bildet eine selbstzentrierende Gleitführung, in der über eine in der Zeichnung nicht näher dargestellte druck- und mengengeregelte ölpumpe ein geschlossener, die Kettenglieder 7 gleitend tragender Ölfilm gebildet wird.

Die beiden stationären Führungen 16 sind beidseitig an einen Kettenträger 22 geschraubt und diesem gegenüber höhen- und seitenjustierbar. An der außenliegenden Längsseite jeder stationären Führung 16 ist eine Dichtleiste 23 befestigt, die den Prismeneingriffsbereich außen abdeckt und in eine in jedem Kettenglied 7 jeweils oberhalb des Außenprismas 17 liegende Längsdichtungsnut 24 dichtend eingreift.

Jedes Kettenglied 7 besteht aus einer mit den beiden Außenprismen 17 versehenen Rotgussplatte 25 und einer auf dieser befestigten Lasttragplatte 26. Außerdem weist jedes Kettenglied 7 eine den Trennspalt zwischen benachbarten Kettengliedern 7 überbrückende Spaltdichtung 27 auf.

Die Präzisionsnadellagerkette 13 läuft in einem seitlich von den beiden stationären Führungen 16 begrenzten, als Überdruckkammer ausgebildeten Hohlraum 28 um, der oben und unten mit Pressluft beaufschlagt ist.

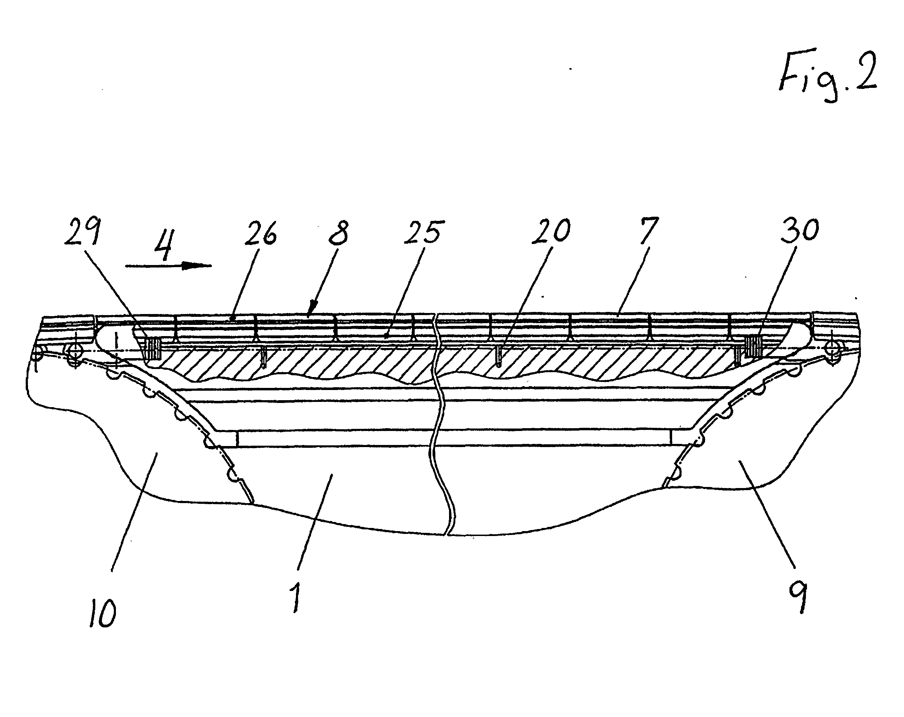

Figur 2 lässt erkennen, dass am Kettenbahneinlauf ein Staubabstreifer 29 für die Außenprismen 17 der Kettenglieder 7 und am Kettenbahnauslauf ein Ölabstreifer 30 für die genannten Außenprismen 17 vorgesehen sind.

## Patentansprüche

1. Transportkette für im Durchlaufverfahren spanend zu bearbeitende leisten- oder plattenförmige Werkstücke (5), insbesondere für Kantenbearbeitungsmaschinen oder Doppelendprofiler, mit Kettengliedern (7), die ein endloses, um Kettenräder (9, 10) umgelenktes Kettenband mit im wesentlichen durchgehender Lasttragfläche (8) bilden, durch Verbindungsstücke und parallele, in Nadellagern (14) gelagerte Kettenbolzen (15) miteinander verbunden sind und sich auf zwei parallel und im Abstand voneinander angeordneten stationären Führungen (16) abstützen, **dadurch gekennzeichnet, dass** jedes Kettenglied (7) zwei den stationären Führungen (16) zugeordnete, positiv ausgebildete prismatische oder zylindrische Führungsprofile (nachfolgend: Außenprisma 17) aufweist, die in ihnen im Querschnitt angepaßten Führungsrinnen (18) (nachfolgend: Innenprisma) der stationären Führungen (16) gleitend geführt sind, die über Öl-Zulauf- und -Rücklaufleitungen (19, 20) an ein Öl-Umlaufdruckschmiersystem angeschlossen sind und eine selbstzentrierende Gleitführung mit geschlossenem, die Kettenglieder (7) gleitend tragenden Ölfilm bilden.

2. Transportkette nach Anspruch 1, **dadurch gekennzeichnet, dass** jede Führungsrinne (18) eine mittige Längsnut (21) für den Ölrücklauf aufweist.

3. Transportkette nach Anspruch 1 oder 2, **dadurch gekennzeichnet, dass** zumindest eine der beiden stationären Führungen (16) höhen- und seitenjustierbar an einem Kettenträger (22) befestigt ist.

4. Transportkette nach Anspruch 1, 2 oder 3, **dadurch gekennzeichnet, dass** an der außen liegenden Längsseite jeder stationären Führung (16) eine Dichtleiste (23) befestigt ist, die den Prismeneingriffsbereich außen abdeckt und in eine in jedem Kettenglied (7) jeweils oberhalb des Außenprismas (17) liegende Längsdichtungsnut (24) dichtend eingreift.

5. Transportkette nach einem der vorhergehenden Ansprüche,
**dadurch gekennzeichnet, dass** das vorzugsweise 90°-Innenprisma der Führungsrinne (18) aus gehärtetem und geschliffenem Stahl besteht.

6. Transportkette nach einem der vorhergehenden Ansprüche,
**dadurch gekennzeichnet, dass** jedes Kettenglied (7) aus einer mit den beiden Außenprismen (17) versehenen Rotgussplatte (25) und einer auf dieser befestigten Lasttragplatte (26) besteht.

7. Transportkette nach einem der vorhergehenden Ansprüche,
**dadurch gekennzeichnet, dass** jedes Kettenglied (7) eine den Trennspalt zwischen benachbarten Kettengliedern (7) überbrückende Spaltdichtung (27) aufweist.

8. Transportkette nach einem der vorhergehenden Ansprüche,
**gekennzeichnet durch** eine um Kettenräder (9, 10) mit verhältnismäßig großem Durchmesser herumgeführte Präzisionsnadellagerkette (13) mit kleiner Teilung und vorzugsweise staubdicht eingebauten Lagern (14).

9. Transportkette nach einem der vorhergehenden Ansprüche, **dadurch gekennzeichnet, dass** die Kettenbolzen (15) beidseitig in die Kettenräder (9, 10) einzahnen.

10. Transportkette nach Anspruch 8 oder 9, **dadurch gekennzeichnet, dass** die Präzisionsnadellagerkette (13) in einem seitlich von den beiden stationären Führungen (16) begrenzten, als Überdruckkammer ausgebildeten Hohlraum (28) umläuft, der mit Druckluft beaufschlagt ist.

11. Transportkette nach einem der vorhergehenden Ansprüche,
**dadurch gekennzeichnet, dass** am Kettenbahneinlauf ein Staubabstreifer (29) für die Außenprismen (17) der Kettenglieder (7) vorgesehen ist.

12. Transportkette nach einem der vorhergehenden Ansprüche,
**dadurch gekennzeichnet, dass** am Kettenbahnauslauf ein Ölabstreifer (30) für die Außenprismen (17) der Kettenglieder (7) vorgesehen ist.

13. Transportkette nach einem der vorhergehenden Ansprüche, **gekennzeichnet durch** eine Filteranlage für das aus den Führungsrinnen (18) zurücklaufende Öl.

14. Transportkette nach einem der vorhergehenden Ansprüche,
**gekennzeichnet durch** ein den unteren bzw. losen Trum der Transportkette (1) abstützendes Gurtband (3).

15. Transportkette nach Anspruch 14, **dadurch gekennzeichnet, dass** das Gurtband (3) synchron zur Nadellagerkette (13) angetrieben ist.

16. Transportkette nach Anspruch 14 oder 15, **dadurch gekennzeichnet, dass** das Gurtband (3) über kugelgelagerte Stützrollen (12) geführt ist.

## Claims

1. Conveyor chain for strip- or plate-shaped workpieces (5) to be machined by a continuous process, in particular for machines for machining edges or for double-end profilers, comprising chain links (7) which form an endless chain band deflected around chain wheels (9, 10) and having an essentially continuous load-bearing surface (8), are connected to one another by connecting pieces and parallel link pins (15) mounted in needle bearings (14), and are supported on two stationary guides (16) arranged parallel to and at a distance from one another, **characterized in that** each chain link (7) has two prismatic or cylindrical guide profiles (hereinafter: outer prisms 17) of positive design which are assigned to the stationary guides (16) and are guided in a sliding manner in guide channels (18) (hereinafter: inner prisms), adapted to them in cross section, of the stationary guides (16), these inner prisms being connected via oil-feed and oil-return lines (19, 20) to an oil circulation pressure lubrication system and forming a self-centring sliding guide with a closed oil film supporting the chain links (7) in a sliding manner.

2. Conveyor chain according to Claim 1, **characterized in that** each guide channel (18) has a central longitudinal groove (21) for the oil return.

3. Conveyor chain according to Claim 1 or 2,
**characterized in that** at least one of the two stationary guides (16) is fastened to a chain carrier (22) in a vertically and laterally adjustable manner.

4. Conveyor chain according to Claim 1, 2 or 3, **characterized in that** a sealing strip (23) is fastened to the outer longitudinal side of each stationary guide (16), and this sealing strip (23) covers the prism engagement region on the outside and engages in a sealing manner in a longitudinal sealing groove (24) lying in each chain link (7) in each case above the outer prism (17).

5. Conveyor chain according to one of the preceding claims, **characterized in that** the preferably 90° inner prism of the guide channel (18) is made of hardened and ground steel.

6. Conveyor chain according to one of the preceding claims, **characterized in that** each chain link (7) consists of a red-brass plate (25) provided with the two outer prisms (17) and of a load-bearing plate (26) fastened to this red-brass plate (25).

7. Conveyor chain according to one of the preceding claims, **characterized in that** each chain link (7) has a gap seal (27) bridging the separating gap between adjacent chain links (7).

8. Conveyor chain according to one of the preceding claims, **characterized by** a precision needle bearing chain (13) which is guided around chain wheels (9, 10) having a relatively large diameter and has a small pitch and bearings (14) preferably fitted in a dust-tight manner.

9. Conveyor chain according to one of the preceding claims, **characterized in that** the link pins (15) mesh with the teeth of the chain wheels (9, 10) on both sides.

10. Conveyor chain according to Claim 8 or 9,
**characterized in that** the precision needle bearing chain (13) revolves in a cavity (28) which is defined laterally by the two stationary guides (16) and is designed as a positive-pressure chamber and to which compressed air is applied.

11. Conveyor chain according to one of the preceding claims, **characterized in that** a dust wiper (29) for the outer prisms (17) of the chain links (7) is provided at the chain path entry.

12. Conveyor chain according to one of the preceding claims, **characterized in that** an oil wiper (30) for the outer prisms (17) of the chain links (7) is provided at the chain path exit.

13. Conveyor chain according to one of the preceding claims, **characterized by** a filter system for the oil running back from the guide channels (18).

14. Conveyor chain according to one of the preceding claims, **characterized by** a flat belt (3) supporting the bottom or loose strand of the conveyor chain (1).

15. Conveyor chain according to Claim 14,
**characterized in that** the flat belt (3) is driven synchronously with the needle bearing chain (13).

16. Conveyor chain according to Claim 14 or 15,
**characterized in that** the flat belt (3) is guided via supporting rollers (12) mounted on ball bearings.

## Revendications

1. Chaîne de transport pour des pièces (5) en forme de plaques ou de barrettes à ouvrer par enlèvement de copeaux au cours du transport, en particulier pour machines pour l'usinage des arêtes ou machines à profiler à deux bouts, laquelle chaîne comprend des maillons de chaîne (7) qui : constituent une chaîne sans fin renvoyée sur des roues à chaîne (9, 10) et présentant une surface porteuse de charge (8) sensiblement continue ; sont reliés les uns aux autres par des pièces de liaison et des tourillons de chaîne (15) parallèles supportés dans des paliers à aiguilles (14) ; et s'appuient sur deux guides fixes (16) parallèles, agencés à distance l'un de l'autre ; **caractérisée en ce que** chaque maillon de chaîne (7) présente deux profils de guidage prismatiques ou cylindriques (ci-après : prisme extérieur 17) réalisés positifs, associés aux guides fixes (16), guidés de façon coulissante dans des rainures de guidage (18) (ci-après : prisme intérieur) adaptées en section transversale aux prismes extérieurs et appartenant aux guides fixes (16), lesquels sont raccordés par l'intermédiaire de conduites d'arrivée et de retour d'huile (19, 20) à un système de lubrification sous pression à circulation d'huile et constituent un guidage à coulisse auto-centreur avec film d'huile fermé supportant de façon coulissante les maillons de chaîne (7).

2. Chaîne de transport selon la revendication 1, **caractérisée en ce que** chaque rainure de guidage (18) présente un canal longitudinal central (21) pour le retour d'huile.

3. Chaîne de transport selon la revendication 1 ou 2, **caractérisée en ce qu'**au moins un des deux guidages fixes (16) est fixé à un porte-chaîne (22) de manière réglable en hauteur et latéralement.

4. Chaîne de transport selon la revendication 1, 2 ou 3, **caractérisée en ce que** sur le côté longitudinal extérieur de chaque guide fixe (16) est fixée une barrette d'étanchéité (23) qui recouvre extérieurement la zone de prise des prismes et s'engage de manière étanche dans un canal d'étanchéité longitudinal respectif (24) prévu dans chaque maillon de chaîne (7) et s'étendant au-dessus du prisme extérieur (17) respectif.

5. Chaîne de transport selon l'une des revendications précédentes, **caractérisée en ce que** le prisme intérieur, de préférence à 90°, de la rainure de guidage (18) est en acier trempé et rectifié.

6. Chaîne de transport selon l'une des revendications précédentes, **caractérisée en ce que** chaque maillon de chaîne (7) est constitué d'une plaque en bronze au zinc (25) munie des deux prismes extérieurs (17) et d'une plaque porteuse de charge (26) fixée sur celle-ci.

7. Chaîne de transport selon l'une des revendications précédentes, **caractérisée en ce que** chaque maillon de chaîne (7) présente une étanchéité d'interstice (27) chevauchant l'interstice de séparation entre maillons de chaîne voisins (7).

8. Chaîne de transport selon l'une des revendications précédentes, **caractérisée par** une chaîne (13) à paliers à aiguilles de précision, finement divisée, guidée autour de roues à chaîne (9, 10) de diamètre relativement grand, avec de préférence des paliers (14) montés de manière étanche à la poussière.

9. Chaîne de transport selon l'une des revendications précédentes, **caractérisée en ce que** les tourillons de chaîne (15) engrènent des deux côtés dans les roues à chaîne (9, 10).

10. Chaîne de transport selon la revendication 8 ou 9, **caractérisée en ce que** la chaîne à paliers à aiguilles de précision (13) circule dans une cavité (28) réalisée en chambre pressurisée, alimentée en air comprimé, délimitée latéralement par les deux guides fixes (16).

11. Chaîne de transport selon l'une des revendications précédentes, **caractérisée en ce qu'**il est prévu à l'entrée de la piste de chaîne un racleur de poussière (29) pour les prismes extérieurs (17) des maillons de chaîne (7).

12. Chaîne de transport selon l'une des revendications précédentes, **caractérisée en ce qu'**il est prévu à la sortie de la piste de chaîne un racleur d'huile (30) pour les prismes extérieurs (17) des maillons de chaîne (7).

13. Chaîne de transport selon l'une des revendications précédentes, **caractérisée par** une installation de filtration pour l'huile revenant des rainures de guidage (18).

14. Chaîne de transport selon l'une des revendications précédentes, **caractérisée par** une courroie (3) soutenant le brin inférieur, c'est à dire libre, de la chaîne de transport (1).

15. Chaîne de transport selon la revendication 14, **caractérisée en ce que** la courroie (3) est entraînée de manière synchrone avec la chaîne (13) à paliers à aiguilles.

16. Chaîne de transport selon la revendication 14 ou 15, **caractérisée en ce que** la courroie (3) est guidée sur des galets d'appui (12) montés sur roulements à billes.
